# EUROPEAN PATENT SPECIFICATION

(11) **EP 3 166 206 B1**
(45) Date of publication and mention of the grant of the patent: **22.05.2019**
(21) Application number: 15815085.4
(22) Date of filing: 26.06.2015
(51) Int. Cl.: H02K 1/14

(54) **ELECTRIC MOTOR**
ELEKTROMOTOR
MOTEUR ÉLECTRIQUE

(30) Priority: 03.07.2014 JP 2014137826
(43) Date of publication of application: 10.05.2017
(73) Proprietor: Panasonic Intellectual Property Management Co., Ltd., Osaka-shi, Osaka 540-6207 (JP)
(72) Inventor: KAWASAKI, Hiroaki, Osaka-shi Osaka 540-6207 (JP)
(74) Representative: SSM Sandmair
(86) International application number: PCT/JP2015/003211
(87) International publication number: WO 2016/002174

(56) References cited:
- JP-A- 2005 185 100
- JP-A- 2006 254 569
- JP-A- 2010 259 174
- JP-A- 2010 259 174
- JP-A- 2010 273 449
- JP-A- 2011 019 360
- JP-A- 2011 114 989

## Description

### TECHNICAL FIELD

The present invention relates to an electric motor which includes a stator configured by a plurality of iron core divisions.

### BACKGROUND ART

There has been disclosed in PTL 1 an electric motor which includes a stator configured by a plurality of iron core divisions. A core sheet division described in PTL 1 includes a yoke extending in a circumferential direction, and a tooth extending in a radial direction. A number of the core sheet divisions are laminated in an axial direction to form a core segment. The core segment corresponds to an iron core division according to the present application. The core segment includes at least either a protrusion portion positioned at one end of the yoke in the circumferential direction, or a recess portion positioned at the other end of the yoke in the circumferential direction. A stator iron core is formed by a plurality of the assembled core segments.

In an assembled state of the plurality of core segments, the recess portion included in one of each adjoining pair of the core segments engages with an outer circumference of the protrusion portion included in the other of the corresponding adjoining pair of the core segments in a range wider than 180 degrees.

In addition, an inclined portion is formed at the one end of the yoke in the circumferential direction. A projecting portion is formed at the other end of the yoke in the circumferential direction.

According to this configuration, the plurality of connected core segments are transformed into an annular stator iron core from a serial body configured by the yokes arranged in line. The teeth of the annular stator iron core are extended in the radial direction, and arranged such that the adjoining teeth are positioned in parallel with each other. A coil is wound around the teeth positioned such that the adjoining teeth are positioned in parallel with each other. In a state that the adjoining teeth are positioned in parallel with each other, the coil is easily and continuously wound around the respective teeth.

Moreover, according to this configuration, sufficient clearances are secured between the respective adjoining teeth as passages of a wire forming the coil when the coil is wound around the teeth. In this case, the coil is densely wound around the teeth, thus output of the electric motor disclosed in PTL 1 improves.

There is further disclosed in PTL 2 a stator core division which includes a yoke having S-shaped recess portion and protrusion portion. The stator core division corresponds to an iron core division according to the present application.

JP 2010-259174 A describes a method of manufacturing split core-type motor stators, capable of achieving a reduction of a number of man-hours for wire connection and a reduction of wire connection space. In the method of manufacturing split core-type motor stators, split cores are linearly coupled to form a linear split core coupled body and wire winding work is conducted on each salient pole of the linear split core coupled body. When the split cores are linearly coupled, the salient poles are protruded in parallel at equal intervals on the same side. Accordingly, it is possible to set it on a wire winder and use an identical coil winding on each of the multiple salient poles to continuously carry out concentrated winding. Thereby, it is possible to greatly reduce the number of man-hours for winding and the number of man-hours for wire connection as compared with cases where wire winding work is individually carried out on each salient pole to make connections together.

JP 2011-019360 A describes a stator capable of increasing the space factor of winding in slots, and also preventing the increase of reluctance. In the stator with an insulator which insulates between the stator core and the winding, the stator core is divided into a plurality of split cores in the circumferential direction A, and the insulator is divided into a plurality of split insulators which are fixed to the split cores, respectively. Each split insulator has a coupling means connected with an adjoining split insulator, and a connection consisting of the plurality of split cores and the plurality of split insulators connected by the coupling means can be deformed into a straight line shape where the plurality of split cores are arranged while being developed in a straight line, and an annular shape where the plurality of split cores are arranged annularly.

JP 2006-254569 A describes a winding method and a winding machine in which the time required for winding around a core can be shortened furthermore. In this respect, a core is constituted of a plurality of split cores with teeth coupled rotatably and formed annularly such that the teeth are arranged on the outside. The core is also arranged such that one position between the teeth can be separated and coupled turnably. When a winding is wound around the teeth, a step for rotating the core relatively to three flyers arranged on the outside of the core and opposing three teeth to three flyers, and a step for applying the winding to the opposing teeth by means of each flyer are repeated.

### Citation List

### Patent Literature

PTL 1: Unexamined Japanese Patent Publication No. H10-155248
PTL 2: Unexamined Japanese Patent Publication No. 2011-172353
PTL 3: JP 2010-259174 A
PTL 4: JP 2011-019360 A
PTL 5: JP 2006-254569 A

### SUMMARY OF THE INVENTION

The invention is defined by the subject-matter of independent claim 1. The dependent claims are directed to advantageous embodiments.

### ADVANTAGES OF THE INVENTION

Advantageously, it is provided an electric motor including a stator and a rotor.

The stator includes a stator iron core and a coil. The stator iron core includes a plurality of iron core divisions connected to form an annular shape. Each of the iron core divisions includes a yoke and a tooth.

The yoke includes a first end and a second end, and extends in a circumferential direction. The first end includes a protrusion portion positioned on an external diameter side, and a first linear portion positioned on an internal diameter side with respect to the protrusion portion. The first end is positioned at one end in the circumferential direction.

The second end includes a recess portion positioned on the external diameter side, and a second linear portion positioned on the internal diameter side with respect to the recess portion. The second end is positioned at the other end in the circumferential direction. The recess portion includes an external diameter side extension portion positioned on the external diameter side, and an internal diameter side extension portion positioned on the internal diameter side with respect to the external diameter side extension portion.

The tooth crosses the yoke, and extends in a radial direction.

The coil is wound around the stator iron core.

The rotor faces the stator, and is rotatably supported.

The plurality of iron core divisions engage with each other such that the protrusion portion of one of each adjoining pair of the plurality of iron core divisions engages with the recess portion of the other of the corresponding adjoining pair of the plurality of iron core divisions in a manner that the protrusion portion and the recess portion are rotatable. In this case, a rotation center of the protrusion portion is positioned on a bisector of an angle formed by extended and crossed center lines of the teeth of the respective iron core divisions of the corresponding adjoining pair of the plurality of iron core divisions. An internal diameter side extension portion projects toward the one of the corresponding adjoining pair of the plurality of iron core divisions from the bisector.

### BRIEF DESCRIPTION OF DRAWINGS

FIG. 1 is a perspective assembly view of an electric motor according to a first exemplary embodiment of the present invention.
FIG. 2 is a cross-sectional view of the electric motor according to the first exemplary embodiment of the present invention.
FIG. 3 is a partial enlarged view of a stator iron core used in the electric motor according to the first exemplary embodiment of the present invention.
FIG. 4 is an explanatory view illustrating an in-line state of a plurality of iron core divisions used in the electric motor according to the first exemplary embodiment of the present invention.
FIG. 5A is an enlarged view of a main part, illustrating a connection portion of the iron core divisions used in the electric motor according to the first exemplary embodiment of the present invention.
FIG. 5B is another enlarged view of a main part, illustrating the connection portion of the iron core divisions used in the electric motor according to the first exemplary embodiment of the present invention.
FIG. 6 is an enlarged view of a main part, illustrating a connection portion of iron core divisions used in an electric motor according to a second exemplary embodiment of the present invention.

### DESCRIPTION OF EMBODIMENTS

According to an electric motor configured as described below in an exemplary embodiment of the present invention, in an engagement state between a protrusion portion and a recess portion included in one and the other of each adjoining pair of iron core divisions, respectively, a rotation center of the protrusion portion can be located at a closest possible position to an external diameter side of a yoke. In following description, a portion of engagement between the protrusion portion and the recess portion is also referred to as a connection portion.

According to this configuration, no notch is generated in the yoke in an assembled state of the iron core divisions in an annular shape. In this case, no loss is generated in a coil winding space of a stator included in the electric motor of this exemplary embodiment. In other words, an area occupied by the yoke is reduced to a minimum according to the electric motor of this exemplary embodiment when a comparison is made between stators of the same size. Accordingly, the electric motor of this exemplary embodiment is capable of securing a large coil winding space.

As a result, workability is facilitated in a coil winding step according to the electric motor of the exemplary embodiment of the present invention. Moreover, according to the electric motor of this exemplary embodiment, a sufficient passage is secured for magnetic flux generated from a magnet, as well as the coil winding space is enlarged. Accordingly, further size reduction and improvement of output are achievable according to the electric motor of this exemplary embodiment.

More specifically, a conventional electric motor has following points requiring improvement. According to the electric motor disclosed in PTL 1, the connected core segments are formed into a serial body configured by the yokes arranged in line. Thus, each of the core segments of the electric motor disclosed in PTL 1 includes the projecting portion and the inclined portion. Accordingly, when the connected core segments of the electric motor disclosed in PTL 1 are rounded in an annular shape to configure a stator iron core, a notch is generated in each of the core segments along a passage of magnetic flux. This notch becomes a possible factor for generating an air layer through which the magnetic flux is difficult to pass.

A thickness of the yoke included in each of the core segments of the electric motor disclosed in PTL 1 therefore needs to increase in a radial direction to prevent generation of magnetic saturation in the passage of magnetic flux. Increase in the thickness of the yoke included in each of the core segments generates a loss in the coil winding space. This configuration therefore increases a motor body size of the electric motor disclosed in PTL 1, and results in increase in cost.

Further, according to the electric motor disclosed in PTL 2, the S-shaped recess portion and protrusion portion included in each of the stator core divisions are connected to each other when the stator core divisions are rounded in an annular shape to configure a stator iron core. A clearance is easily generated along a curved portion of contact between the S-shaped recess portion and protrusion portion. The clearance thus generated becomes an air layer through which magnetic flux is difficult to pass. Accordingly, the stator iron core of the electric motor disclosed in PTL 2 is not a core through which magnetic flux easily passes.

The electric motor according to the exemplary embodiment of the present invention is capable of solving the aforementioned problems as points requiring improvement. The electric motor provided herein is an electric motor which reduces cost and increases output without enlarging the size of the electric motor.

Specific exemplary embodiments of the present invention are hereinafter described with reference to the drawings. The exemplary embodiments herein are presented only by way of examples practicing the present invention. Accordingly, a technical scope of the present invention is not limited to the exemplary embodiments described herein.

### FIRST EXEMPLARY EMBODIMENT

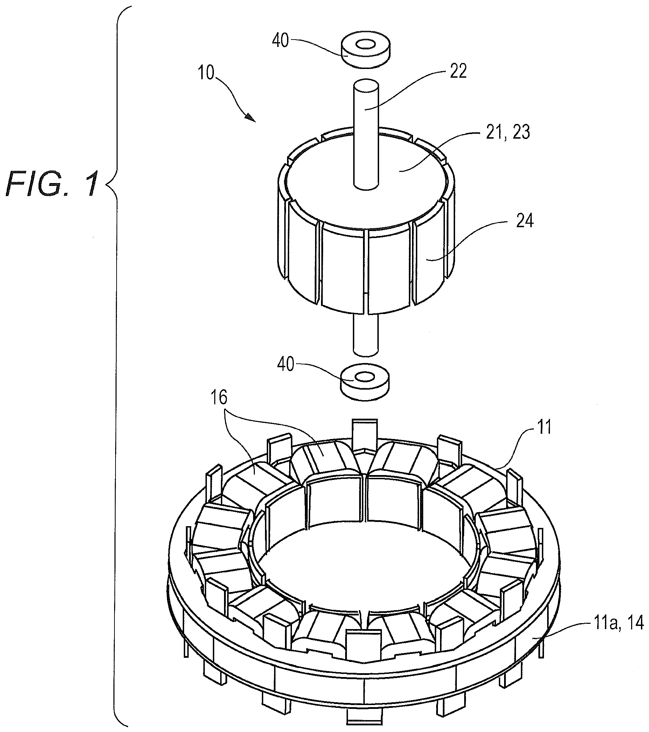

FIG. 1 is a perspective assembly view of an electric motor according to a first exemplary embodiment of the present invention. FIG. 1 illustrates chief elements configuring the electric motor according to the first exemplary embodiment.

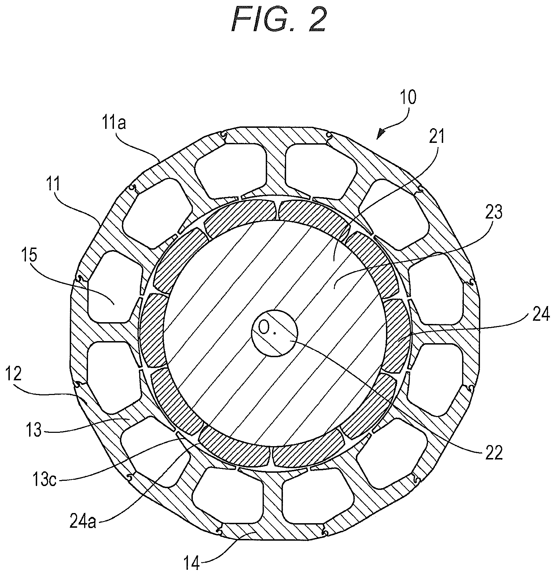

FIG. 2 is a cross-sectional view of the electric motor according to the first exemplary embodiment of the present invention. FIG. 2 does not show a coil for easy understanding of description presented below.

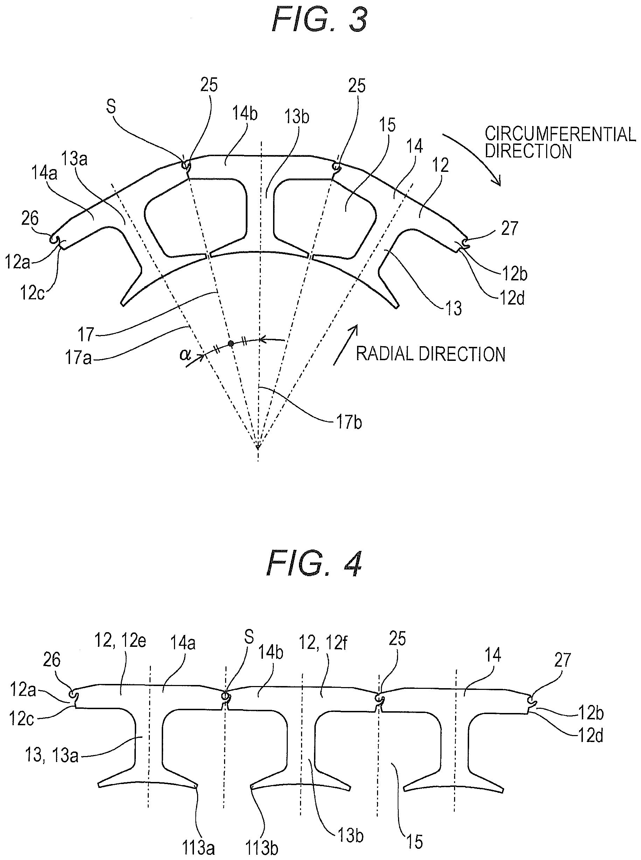

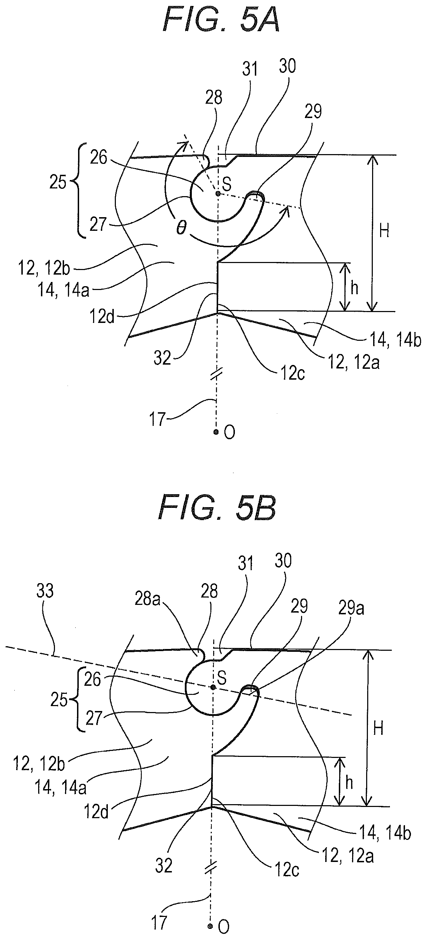

FIG. 3 is a partial enlarged view of a stator iron core used in the electric motor according to the first exemplary embodiment of the present invention. FIG. 4 is an explanatory view illustrating a plurality of iron core divisions used in the electric motor according to the first exemplary embodiment of the present invention in a state that the iron core divisions are arranged in line. FIG. 5A is an enlarged view of a main part, illustrating a connection portion of the iron core divisions used in the electric motor according to the first exemplary embodiment of the present invention. FIG. 5B is another enlarged view of the main part, illustrating the connection portion of the iron core divisions used in the electric motor according to the first exemplary embodiment of the present invention.

As illustrated in FIG. 1 and FIG. 2, electric motor 10 according to the first exemplary embodiment of the present invention includes stator 11 and rotor 21.

In the following description, a circumferential direction refers to an outer circumferential direction of stator iron core 11a having a cylindrical shape. A radial direction refers to a radial direction of stator iron core 11a having the cylindrical shape. An external diameter side refers to an outer circumferential side of stator iron core 11a having the cylindrical shape. An internal diameter side refers to a center point O side of stator iron core 11a having the cylindrical shape.

Stator 11 includes stator iron core 11a and coil 16. Stator iron core 11a has an annular shape formed by a plurality of connected iron core divisions 14. Each of iron core divisions 14 includes yoke 12 and tooth 13. Each of iron core divisions 14 is configured by a plurality of thin steel plates laminated in an axial direction of shaft 22.

As illustrated in FIG. 3 and FIG. 4, each of yokes 12 includes first end 12a and second end 12b, and extends in the circumferential direction. First end 12a includes protrusion portion 26 positioned on the external diameter side, and first linear portion 12c positioned on the internal diameter side with respect to protrusion portion 26. First end 12a is positioned at one end in the circumferential direction.

Second end 12b includes recess portion 27 positioned on the external diameter side, and second linear portion 12d positioned on the internal diameter side with respect to recess portion 27. Second end 12b is positioned at the other end in the circumferential direction.

As illustrated in FIG. 5A, recess portion 27 includes external diameter side extension portion 28 positioned on the external diameter side, and internal diameter side extension portion 29 positioned on the internal diameter side with respect to external diameter side extension portion 28.

As illustrated in FIG. 3 and FIG. 4, each of teeth 13 crosses corresponding yoke 12, and extends in the radial direction. According to the first exemplary embodiment, each of teeth 13 is formed on the internal diameter side with respect to corresponding yoke 12. Slot 15 is positioned between each adjoining pair of teeth 13.

As illustrated in FIG. 1, coil 16 is wound around stator iron core 11a. More specifically, coil 16 is wound around each of teeth 13 included in stator iron core 11a. Coil 16 is wound around stator iron core 11a by concentrated winding or distributed winding. Coil 16 in a wound state is accommodated in corresponding slot 15.

As illustrated in FIG. 1 and FIG. 2, rotor 21 faces stator 11 in a rotatably supported state. Rotor 21 includes rotor iron core 23, and shaft 22 to which rotor iron core 23 is fixed according to the first exemplary embodiment presented by way of example. Rotor iron core 23 is configured by a plurality of thin steel plates laminated in the axial direction of shaft 22. Permanent magnets 24 are attached to a side wall of rotor iron core 23 in the circumferential direction. Permanent magnets 24 are attached such that north poles and south poles are alternately positioned with a predetermined clearance left between each other. Rotor 21 is rotatably supported by a pair of bearings 40. Surfaces 24a of permanent magnets 24 attached to rotor 21, and inner circumferential surfaces 13c of teeth 13 included in stator 11 face each other via an air gap.

As illustrated in FIG. 2 through FIG. 5A, protrusion portion 26 included in adjoining iron core division 14b of the plurality of iron core divisions 14 engages with recess portion 27 included in adjoining iron core division 14a of the plurality of iron core divisions 14 in a manner that protrusion portion 26 and recess portion 27 are rotatable. In this case, rotation center S of protrusion 26 is positioned on line 17 corresponding to a bisector of angle α formed by extended lines of center lines 17a and 17b of teeth 13 of an adjoining pair of the plurality of iron core divisions 14.

Internal diameter side extension portion 29 projects toward adjoining iron core division 14b from bisector 17.

A configuration which exhibits remarkable advantageous effects is hereinafter described.

As illustrated in FIG. 5B, external diameter side extension portion 28 includes first tip portion 28a positioned at a tip of external diameter side extension portion 28. Internal diameter side extension portion 29 includes second tip portion 29a at a tip of internal diameter side extension portion 29.

As illustrated in FIG. 2 through FIG. 5B, protrusion portion 26 included in one of an adjoining pair of the plurality of iron core divisions 14 engages with recess portion 27 included in the other of the corresponding adjoining pair of the plurality of iron core divisions 14 in a manner that protrusion portion 26 and recess portion 27 are rotatable. In this case, first tip portion 28a of recess portion 27 is positioned on the external diameter side with respect to line 33 connecting second tip portion 29a and rotation center S.

As illustrated in FIG. 5A, recess portion 27 engages with protrusion portion 26 in a range exceeding 180 degrees around rotation center S. Recess portion 27 may engage with protrusion portion 26 in a range from an angle exceeding 180 degrees to an angle of 270 degrees around rotation center S. This configuration increases workability for bringing recess portion 27 into engagement with protrusion portion 26. Moreover, this configuration maintains appropriate retaining force after engagement between recess portion 27 and protrusion portion 26.

Each length h of first linear portion 12c and second linear portion 12d is one third or more of thickness H of yoke 12. It is particularly preferable that length h of first linear portion 12c and second linear portion 12d is a half or more of thickness H of yoke 12.

According to electric motor 10 of the first exemplary embodiment illustrated in FIG. 1 and FIG. 2, a number of poles of rotor 21 is set to "ten", while a number of slots of stator 11 is set to "twelve". Note that, the numbers of the poles and slots according to the present invention are not limited to a combination of these numbers, but may be other combinations.

Detailed description further continues with reference to the drawings.

In following description, a portion connecting the adjoining iron core divisions is referred to as a connection portion. As illustrated in FIG. 5A, connection portion 25 includes protrusion portion 26 included in first end 12a of one yoke 12, and recess portion 27 included in second end 12b of other yoke 12.

A shape of protrusion portion 26 and a shape of recess portion 27 may be a shape that protrusion portion 26 and recess portion 27 engaging with each other are rotatable. It is preferable that protrusion portion 26 and recess portion 27 configuring connection portion 25 have such a shape not easily generating an air layer even at a time of rotation of connected iron core divisions 14. When protrusion portion 26 and recess portion 27 configuring connection portion 25 have a shape not easily generating an air layer, magnetic flux more easily passes through stator iron core 11a.

According to an example presented hereinbelow, each of protrusion portion 26 and recess portion 27 configuring connection portion 25 has a circular-arc shape. Needless to say, each shape of protrusion portion 26 and recess portion 27 configuring connection portion 25 is not limited to a circular-arc shape.

Rotation center S of each of protrusion portion 26 and recess portion 27 configuring connection portion 25 is located at an arc center of protrusion portion 26. Connection portion 25 is rotatable around rotation center S corresponding to a center of a rotation action. The plurality of iron core divisions 14 are connected to each other via corresponding connection portions 25. Connected iron core divisions 14 are rounded in an annular shape to form a cylindrical shape. The plurality of iron core divisions 14 having a cylindrical shape function as stator iron core 11a. When the plurality of iron core divisions 14 function as stator iron core 11a, protrusion portion 26 and recess portion 27 configuring each of connection portions 25 function as a part of yoke 12 through which magnetic flux passes.

As illustrated in FIG. 3, center line 17a is a center line of tooth 13a included in iron core division 14a. Center line 17b is a center line of tooth 13b included in iron core division 14b located adjacent to iron core division 14a. Center line 17a and center line 17b cross each other at angle α. Rotation center S of protrusion 26 is located on line 17 corresponding to a bisector of angle α.

According to this configuration, yoke 12e included in iron core division 14a and yoke 12f included in iron core division 14b located adjacent to iron core division 14a are arranged in line as illustrated in FIG. 4. In a state that yoke 12e and yoke 12f are arranged in line, tooth 13a included in iron core division 14a and tooth 13b included in iron core division 14b located adjacent to division core 14a are positioned in parallel with each other. When tooth 13a and tooth 13b are positioned in parallel with each other, the coil is easily and continuously wound around iron core divisions 14 in a step for winding the coil around iron core divisions 14. Accordingly, workability in the coil winding step improves.

Moreover, according to this configuration, a sufficient open space is maintained between end 113a of tooth 13a and end 113b of tooth 13b located adjacent to tooth 13a in the coil winding step. A sufficient clearance thus secured between adjoining teeth 13a and 13b allows a nozzle used as equipment for winding the coil to easily move between adjoining teeth 13a and 13b.

Accordingly, the wound coil reaches a deep portion of each slot 15 in an aligned state. In this case, the coil is densely wound around the stator iron core used in the electric motor according to the first exemplary embodiment. As a result, output from the electric motor is expected to increase according to the first exemplary embodiment.

In addition, internal diameter side extension portion 29 included in recess portion 27 projects toward adjoining iron core division 14b from bisector 17 as illustrated in FIG. 5A. According to this configuration, the range of engagement of connection portion 25 widens on the internal diameter side extension portion 29 side. Thus, no problem occurs even when the range of engagement on the external diameter side extension portion 28 side is reduced by narrowing the shape of external diameter side extension portion 28. Accordingly, rotation center S of protrusion portion 26 is allowed to be located at a position relatively close to the external diameter side of yoke 12 according to the electric motor of the first exemplary embodiment.

More specifically, when rotation center S of protrusion portion 26 is located at a position relatively close to the external diameter side of yoke 12, following advantageous effects are exhibited.

The shape of the plurality of connected iron core divisions 14 is changeable into an annular shape or a serial body by rotation of connection portions 25. In this case, formation of notch 31 is needed to prevent physical interference between external diameter side extension portion 28 included in recess portion 27 and external surface 30 positioned on the external diameter side of yoke 12 including protrusion portion 26, which interference may be caused at a time of a shape change of the plurality of iron core divisions 14 from a serial body into an annular shape. According to the configuration of this exemplary embodiment, a size of notch 31 is allowed to be minimized.

Notch 31 is configured by an air layer through which magnetic flux is difficult to pass. Accordingly, when the size of notch 31 located on the external diameter side with respect to connection portion 25 is minimized, sufficient magnetic flux is allowed to pass through stator iron core 11a. Thus, a thickness of yoke 12 in the radial direction is allowed to decrease to the smallest possible thickness not causing magnetic saturation. In other words, a large space sufficient for winding the coil is secured for stator iron core 11a.

Accordingly, a number of windings of the coil included in the electric motor of the first exemplary embodiment may be increased to a larger number. Alternatively, a thick wire having a lower resistance value may be employed as the coil included in the electric motor of the first exemplary embodiment. As a result, improvement of output and efficiency, or size reduction of the electric motor is achievable according to the first exemplary embodiment.

Moreover, connection portion 25 is formed on the external diameter side of yoke 12 as illustrated in FIG. 5A. Linear portion 32 having length h is formed on the internal diameter side of connection portion 25. When the plurality of iron core divisions 14 are formed in an annular shape, first linear portion 12c and second linear portion 12d tightly engage with each other to form linear portion 32.

Accordingly, the electric motor of the first exemplary embodiment reduces an air layer through which magnetic flux is difficult to pass to substantially none between adjoining iron core divisions 14.

Linear portion 32 exhibits following advantageous effects.

Linear portion 32 increases strength of stator iron core 11a assembled in a cylindrical shape. In addition, linear portion 32 increases dimensional accuracy of assembled stator iron core 11a.

Accordingly, the electric motor of the first exemplary embodiment can suppress noise and vibration generated in a case of low dimensional accuracy of assembled stator iron core 11a.

Note that, length h of linear portion 32 described above may be an arbitrary length.

It is preferable, however, that length h of linear portion 32 is longer in consideration of strength of stator iron core 11a, assembly easiness of the stator, easiness of passage of magnetic flux, or other points. It is more preferable that, in particular, length h of linear portion 32 is one third or more of thickness H of yoke 12.

It is particularly preferable that length h of linear portion 32 is a half or more of thickness H of yoke 12.

In addition, angle θ of engagement between protrusion portion 26 and recess portion 27 configuring connection portion 25 is larger than 180 degrees.

According to this configuration, stator iron core 11a configured by the plurality of connected iron core divisions 14 is not disassembled in a step for manufacturing stator 11. Moreover, a special jig is not needed to maintain an in-line state of the plurality of connected iron core divisions 14.

This configuration facilitates work for winding the coil and the like performed for the stator included in the electric motor of the first exemplary embodiment. Accordingly, workability dramatically improves.

Furthermore, according to the above configuration, the plurality of connected iron core divisions are not separated from each other in a step for continuously winding the coil around the different teeth. Thus, a load is not easily applied on a connecting wire included in the coil of the stator used in the electric motor according to the first exemplary embodiment. Accordingly, failure such as disconnection decreases.

### SECOND EXEMPLARY EMBODIMENT

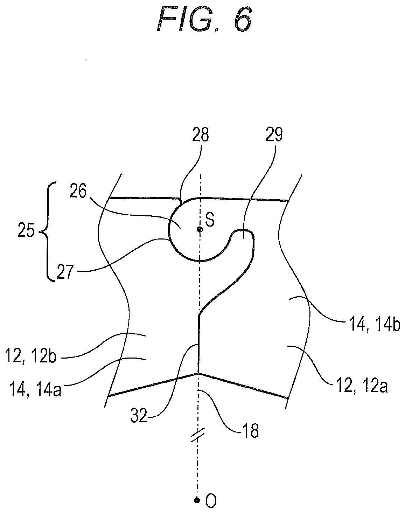

FIG. 6 is an enlarged view of a main part, illustrating a connection portion of iron core divisions used in an electric motor according to a second exemplary embodiment of the present invention.

Configurations similar to the corresponding configurations of the first exemplary embodiment are given similar reference numbers for reference in following description.

As illustrated in FIG. 6, external diameter side extension portion 28 of the electric motor according to the second exemplary embodiment of the present invention is positioned on the first end 12a side of iron core division 14a with respect to straight line 18 connecting center point O of the stator having an annular shape and rotation center S.

More specifically, second tip portion 29a is positioned on the adjoining iron core division 14b side with respect to straight line 18 connecting center point O of the stator having an annular shape and rotation center S.

According to the second exemplary embodiment, center point O of the stator corresponds to an axial center of shaft 22.

More specifically, the plurality of iron core divisions 14 are transformed into an annular shape to form stator iron core 11a. In this case, external diameter side extension portion 28 included in recess portion 27 is not positioned on straight line 18 connecting center point O of stator 11 and rotation center S of protrusion portion 26.

According to this configuration, rotation center S of protrusion portion 26 is located at a closest possible position to the external diameter side of yoke 12.

When rotation center S of protrusion portion 26 is located at a closest possible position to the external diameter side of yoke 12, the plurality of connected iron core divisions 14 are rotatable to come into an in-line state.

In addition, the plurality of connected iron core divisions 14 are rounded in an annular shape to configure stator iron core 11a. In this case, formation of notch is not needed for connection portion 25 on the external diameter side of yoke 12.

According to this configuration, the thickness of yoke 12 of the stator iron core used in the electric motor decreases to a minimum so that sufficient magnetic flux can pass through the stator of the second exemplary embodiment. Yoke 12 includes the connection portion not causing magnetic saturation. Accordingly, a large space sufficient for winding the coil is secured in the stator iron core used in the electric motor of the second exemplary embodiment.

Accordingly, a number of windings of the coil included in the stator iron core used in the electric motor of the second exemplary embodiment may be increased to a larger number. Alternatively, a thick wire having a lower resistance value may be employed as the coil for the stator iron core used in the electric motor of the second exemplary embodiment. As a result, improvement of output and efficiency, or size reduction of the electric motor is achievable according to the second exemplary embodiment.

The electric motor presented in the foregoing description is an internal rotor type motor. Needless to say, similar advantageous effects can be exhibited by an external rotor type electric motor according to the present invention.

Note that, in case of the external rotor type electric motor, teeth are formed to extend from yokes toward the external diameter side. However, a relationship between a protrusion portion and a recess portion configuring a connection portion is similar to the corresponding relationship described above.

### INDUSTRIAL APPLICABILITY

An electric motor according to the present invention has a wide range of application without any particular limitations as long as a stator is included in the electric motor.

### REFERENCE MARKS IN THE DRAWINGS

10 electric motor
11 stator
11a stator iron core
12, 12e, 12f yoke
12a first end
12b second end
12c first linear portion
12d second linear portion
13, 13a, 13b tooth
13c inner circumferential surface
14, 14a, 14b iron core division
15 slot
16 coil
17 bisector
17a, 17b center line
18 straight line
21 rotor
22 shaft
23 rotor iron core
24 permanent magnet
24a surface
25 connection portion
26 protrusion portion
27 recess portion
28 external diameter side extension portion
28a first tip portion
29 internal diameter side extension portion
29a second tip portion
30 external surface
31 notch
32 linear portion
33 line
40 bearing
113a, 113b end

## Claims

1. An electric motor (10) comprising:
a stator (11) that includes
a stator iron core (11a) that includes a plurality of iron core divisions (14) connected to form an annular shape, each of the iron core divisions (14) including
a yoke (12) that extends in a circumferential direction, and includes
a first end (12a) that is positioned at one end in the circumferential direction, and includes
a protrusion portion (26) positioned on an external diameter side and having a circular arc shape, and
a first linear portion (12c) positioned on an internal diameter side with respect to the protrusion portion (26),
a second end (12b) that is positioned at the other end in the circumferential direction, and includes
a recess portion (27) that is positioned on the external diameter side, and includes
an external diameter side extension portion (28) positioned on the external diameter side, and
an internal diameter side extension portion (29) positioned on the internal diameter side with respect to the external diameter side extension portion (28), and
a second linear portion (12d) positioned on the internal diameter side with respect to the recess portion (27), and
a tooth (13) that crosses the yoke (12), and extends in a radial direction, and
a coil (16) wound around the stator iron core (11a); and
a rotor (21) that faces the stator (11), and is rotatably supported,
wherein:
when the plurality of iron core divisions (14) engage with each other such that the protrusion portion (26) of one of each adjoining pair (14a, 14b) of the plurality of iron core divisions (14) engages with the recess portion (27) of the other of a corresponding adjoining pair (14a, 14b) of the plurality of iron core divisions (14) in a manner that the protrusion portion (26) and the recess portion (27) are rotatable,
a rotation center (S) of the protrusion portion (26) is positioned on a bisector (17) of an angle (α) formed by extended and crossed center lines (17a, 17b) of the teeth (13) of the respective iron core divisions (14) of the corresponding adjoining pair (14a, 14b) of the plurality of iron core divisions (14), said rotation center (S) being located at an arc center of the protrusion portion (26),
the internal diameter side extension portion (29) extends from the bisector (17) and projects toward the one of the corresponding adjoining pair (14a, 14b) of the plurality of iron core divisions (14),
the first and second linear portions (12c, 12d) form one linear portion (32) at which the respective yokes (12) of the corresponding adjoining pair (14a, 14b) of the plurality of iron core divisions (14) are connected, said linear portion (32) being formed by tightly engaging the first and second linear portion (12c, 12d),
the linear portion (32) is positioned on the bisector (17) and in a direction along the bisector (17),
the recess portion (27) engages with the protrusion portion (26) in a range exceeding 180 degrees around the rotation center (S),
the protrusion portion (26) and the recess portion (27) are rotatable around the rotation center (S) of the protrusion portion (26),
the external diameter side extension portion (28) has a first tip portion (28a) at a tip of the external diameter side extension portion (28),
the internal diameter side extension portion (29) has a second tip portion (29a) at a tip of the internal diameter side extension portion (29), said second tip portion (29a) adjoining the iron core division (14b),
**characterised in that** the first tip portion (28a) is arranged on one side of the bisector (17) and the second tip portion (29a) is arranged on the other side of the bisector (17), and
the first tip portion (28a) is arranged on the external diameter side with respect to a line (33) connecting the second tip portion (29a) and the rotation center (S).

2. The electric motor (10) according to claim 1, wherein the external diameter side extension portion (28) is positioned on the side of the second end (12b) with respect to a straight line (18) connecting a center point (O) of the annular stator (11) and the rotation center (S).

3. The electric motor (10) according to claim 1, wherein the second tip portion (29a) is positioned on the one side of the corresponding adjoining pair (14a, 14b) of the plurality of iron core divisions (14) with respect to a straight line (18) connecting a center point (O) of the annular stator (11) and the rotation center (S).

4. The electric motor (10) according to claim 1, wherein a length h of each of the first linear portion (12c) and the second linear portion (12d) is one third or more of a thickness H of the yoke (12) in the radial direction.

5. The electric motor (10) according to claim 1, wherein a length h of each of the first linear portion (12c) and the second linear portion (12d) is a half or more of a thickness H of the yoke (12) in the radial direction.

## Patentansprüche

1. Elektromotor (10), der Folgendes umfasst:
einen Stator (11), der Folgendes enthält:
einen Stator-Eisenkern (11a), der mehrere Eisenkernteile (14) enthält, die verbunden sind, um eine Ringform zu bilden, wobei jeder der Eisenkernteile (14) Folgendes enthält:
ein Joch (12), das sich in einer Umfangsrichtung erstreckt und Folgendes enthält:
ein erstes Ende (12a), das in Umfangsrichtung an einem Ende positioniert ist und Folgendes enthält:
einen Vorsprungsabschnitt (26), der auf einer Außendurchmesserseite positioniert ist und eine Kreisbogenform aufweist, und
einen ersten geradlinigen Abschnitt (12c), der bezüglich des Vorsprungsabschnitts (26) auf einer Innendurchmesserseite positioniert ist,
ein zweites Ende (12b), das in der Umfangsrichtung am anderen Ende positioniert ist und Folgendes enthält:
einen Vertiefungsabschnitt (27), der an der Außendurchmesserseite positioniert ist und Folgendes enthält:
einen Außendurchmesser-Seitenverlängerungsabschnitt (28), der auf der Außendurchmesserseite positioniert ist, und
einen Innendurchmesser-Seitenverlängerungsabschnitt (29), der bezüglich des Außendurchmesser-Seitenverlängerungsabschnitts (28) auf der Innendurchmesserseite positioniert ist, und
einen zweiten geradlinigen Abschnitt (12d), der bezüglich des Vertiefungsabschnitts (27) auf der Innendurchmesserseite positioniert ist, und
einen Zahn (13), der das Joch (12) kreuzt und sich in einer radialen Richtung erstreckt, und
eine Spule (16), die um den Stator-Eisenkern (11a) gewickelt ist; und
einen Rotor (21), der dem Stator (11) gegenüberliegt und drehbar gelagert ist,
wobei:
dann, wenn die mehreren Eisenkernteile (14) derart ineinander greifen, dass der Vorsprungsabschnitt (26) von einem jedes aneinandergrenzenden Paares (14a, 14b) der mehreren Eisenkernteile (14) in den Vertiefungsabschnitt (27) des anderen eines entsprechenden aneinandergrenzenden Paares (14a, 14b) der mehreren Eisenkernteile (14) in einer Weise eingreift, dass der Vorsprungsabschnitt (26) und der Vertiefungsabschnitt (27) drehbar sind,
ein Drehzentrum (S) des Vorsprungsabschnitts (26) auf einer Halbierenden (17) eines Winkels (α) positioniert ist, der durch verlängerte und sich schneidende Mittellinien (17a, 17b) der Zähne (13) der jeweiligen Eisenkernteile (14) des entsprechenden aneinandergrenzenden Paares (14a, 14b) der mehreren Eisenkernteile (14) gebildet ist, wobei sich das Drehzentrum an einem Bogenmittelpunkt des Vorsprungsabschnitts (26) befindet,
der Innendurchmesser-Seitenverlängerungsabschnitt (29) sich von der Halbierenden (17) erstreckt und in Richtung des einen des entsprechenden aneinandergrenzenden Paares (14a, 14b) der mehreren Eisenkernteile (14) vorsteht,
der erste und der zweite geradlinige Abschnitt (12c, 12d) einen geradlinigen Abschnitt (32) bilden, an dem die jeweiligen Joche (12) des entsprechenden aneinandergrenzenden Paares (14a, 14b) der mehreren Eisenkernteile (14) verbunden sind, wobei der geradlinige Abschnitt (32) durch festes Ineinandergreifen des ersten und des zweiten geradlinigen Abschnitts (12c, 12d) gebildet ist,
der geradlinige Abschnitt (32) auf der Halbierenden (17) und in einer Richtung entlang der Halbierenden (17) positioniert ist,
der Vertiefungsabschnitt (27) in einem Bereich, der 180 Grad um das Drehzentrum (S) überschreitet, in den Vorsprungsabschnitt (26) eingreift,
der Vorsprungsabschnitt (26) und der Vertiefungsabschnitt (27) drehbar um das Drehzentrum (S) des Vorsprungsabschnitts (26) sind,
der Außendurchmesser-Seitenverlängerungsabschnitt (28) einen ersten Spitzenabschnitt (28a) an einer Spitze des Außendurchmesser-Seitenverlängerungsabschnitts (28) aufweist,
der Innendurchmesser-Seitenverlängerungsabschnitt (29) einen zweiten Spitzenabschnitt (29a) an einer Spitze des Innendurchmesser-Seitenverlängerungsabschnitts (29) aufweist, wobei der zweite Spitzenabschnitt (29a) an den Eisenkernteil (14b) angrenzt,
**dadurch gekennzeichnet, dass**
der erste Spitzenabschnitt (28a) auf einer Seite der Halbierenden (17) angeordnet ist und der zweite Spitzenabschnitt (29a) auf der anderen Seite der Halbierenden (17) angeordnet ist, und
der erste Spitzenabschnitt (28a) bezüglich einer Linie (33), die den zweiten Spitzenabschnitt (29a) und das Drehzentrum (S) verbindet, auf der Außendurchmesserseite angeordnet ist.

2. Elektromotor (10) nach Anspruch 1, wobei der Außendurchmesser-Seitenverlängerungsabschnitt (28) bezüglich einer geraden Linie (18), die einen Mittelpunkt (O) des ringförmigen Stators (11) und das Drehzentrum (S) verbindet, auf der Seite des zweiten Endes (12b) positioniert ist.

3. Elektromotor (10) nach Anspruch 1, wobei der zweite Spitzenabschnitt (29a) bezüglich einer geraden Linie (18), die einen Mittelpunkt (O) des ringförmigen Stators (11) und das Drehzentrum (S) verbindet, auf der einen Seite des entsprechenden aneinandergrenzenden Paares (14a, 14b) der mehreren Eisenkernteile (14) positioniert ist.

4. Elektromotor (10) nach Anspruch 1, wobei eine Länge h sowohl des ersten geradlinigen Abschnitts (12c) als auch des zweiten geradlinigen Abschnitts (12d) einem Drittel oder mehr einer Dicke H des Jochs (12) in der radialen Richtung entspricht.

5. Elektromotor (10) nach Anspruch 1, wobei eine Länge h sowohl des ersten geradlinigen Abschnitts (12c) als auch des zweiten geradlinigen Abschnitts (12d) einer Hälfte oder mehr einer Dicke H des Jochs (12) in der radialen Richtung entspricht.

## Revendications

1. Moteur électrique (10) comprenant :
un stator (11) qui comprend
un noyau ferreux de stator (11a) qui comprend une pluralité de divisions de noyaux ferreux (14) reliées pour former une forme annulaire, chacune des divisions de noyaux ferreux (14) comprenant
une culasse (12) qui s'étend dans une direction circonférentielle, et comprend
une première extrémité (12a) qui est positionnée au niveau d'une extrémité dans la direction circonférentielle, et comprend
une partie saillante (26) positionnée sur un côté de diamètre externe et présentant une forme d'arc de cercle, et
une première partie linéaire (12c) positionnée sur un côté de diamètre interne par rapport à la partie saillante (26),
une deuxième extrémité (12b) qui est positionnée au niveau de l'autre extrémité dans la direction circonférentielle, et comprend
une partie en retrait (27) qui est positionnée sur le côté de diamètre externe, et comprend
une partie d'extension de côté de diamètre externe (28) positionnée sur le côté de diamètre externe, et
une partie d'extension de côté de diamètre interne (29) positionnée sur le côté de diamètre interne par rapport à la partie d'extension de côté de diamètre externe (28), et
une deuxième partie linéaire (12d) positionnée sur un côté de diamètre interne par rapport à la partie en retrait (27), et
une dent (13) qui traverse la culasse (12), et s'étend dans une direction radiale, et
une bobine (16) enroulée autour du noyau ferreux de stator (11a) ; et
un rotor (21) qui fait face au stator (11), et est supporté en rotation,
lorsque la pluralité de divisions de noyaux ferreux (14) viennent en prise les unes avec les autres de manière que la partie saillante (26) d'une de chaque paire adjacente (14a, 14b) de la pluralité de divisions de noyaux ferreux (14) vient en prise avec la partie en retrait (27) de l'autre d'une paire adjacente correspondante (14a, 14b) de la pluralité de divisions de noyaux ferreux (14) de manière que la partie saillante (26) et la partie en retrait (27) sont rotatives,
un centre de rotation (S) de la partie saillante (26) étant positionnée sur une bissectrice (17) d'un angle (α) formé par des lignes centrales étendues et croisées (17a, 17b) des dents (13) des divisions de noyaux ferreux respectives (14) de la paire adjacente correspondante (14a, 14b) de la pluralité de divisions de noyaux ferreux (14), ledit centre de rotation (S) étant situé dans un centre d'arc de la partie saillante (26),
la partie d'extension de côté de diamètre interne (29) s'étendant de la bissectrice (17) et faisant saillie vers la première de la paire adjacente correspondante (14a, 14b) de la pluralité de divisions de noyaux ferreux (14),
les première et deuxième parties linéaires (12c, 12d) formant une partie linéaire (32) au niveau de laquelle les culasses respectives (12) de la paire adjacente correspondante (14a, 14b) de la pluralité de divisions de noyaux ferreux (14) sont reliées, ladite partie linéaire (32) étant formée par une mise en prise étroite des première et deuxième parties linéaires (12c, 12d),
la partie linéaire (32) étant positionnée sur la bissectrice (17) et dans une direction le long de la bissectrice (17),
la partie en retrait (27) entrant en prise avec la partie saillante (26) dans une plage dépassant 180 degrés autour du centre de rotation (S),
la partie saillante (26) et la partie en retrait (27) étant rotatives autour du centre de rotation (S) de la partie saillante (26),
la partie d'extension de côté de diamètre externe (28) présentant une première partie de pointe (28a) au niveau d'une pointe de la partie d'extension de côté de diamètre externe (28),
la partie d'extension de côté de diamètre interne (29) présentant une deuxième partie de pointe (29a) au niveau d'une pointe de la partie d'extension de côté de diamètre interne (29), ladite deuxième partie de pointe (29a) étant adjacente à la division de noyaux ferreux (14b),
**caractérisé en ce que** :
la première partie de pointe (28a) est disposée sur un côté de la bissectrice (17) et la deuxième partie de pointe (29a) est disposée sur l'autre côté de la bissectrice (17), et
la première partie de pointe (28a) est disposée sur le côté de diamètre externe par rapport à une ligne (33) reliant la deuxième partie de pointe (29a) et le centre de rotation (S).

2. Moteur électrique (10) selon la revendication 1, dans lequel la partie d'extension de côté de diamètre externe (28) est positionnée sur le côté de la deuxième extrémité (12b) par rapport à une ligne droite (18) reliant un point central (O) du stator annulaire (11) et le centre de rotation (S).

3. Moteur électrique (10) selon la revendication 1, dans lequel la deuxième partie de pointe (29a) est positionnée sur le premier côté de la paire adjacente correspondante (14a, 14b) de la pluralité de divisions de noyaux ferreux (14) par rapport à une ligne droite (18) reliant un point central (O) du stator annulaire (11) et le centre de rotation (S).

4. Moteur électrique (10) selon la revendication 1, dans lequel une longueur h de chacune de la première partie linéaire (12c) et de la deuxième partie linéaire (12d) représente au moins un tiers d'une épaisseur H de la culasse (12) dans la direction radiale.

5. Moteur électrique (10) selon la revendication 1, dans lequel une longueur h de chacune de la première partie linéaire (12c) et de la deuxième partie linéaire (12d) représente au moins une moitié d'une épaisseur H de la culasse (12) dans la direction radiale.
